# EUROPEAN PATENT APPLICATION

(11) **EP 1 995 164 A2**
(43) Date of publication of application: **26.11.2008**
(21) Application number: 08153515.5
(22) Date of filing: 28.03.2008
(51) Int. Cl.: B62K 11/00, B62K 19/32

(54) **Frame for a motorcycle with adjustable trailing effect**

(30) Priority: 23.04.2007 IT MI20070845
(71) Applicant: PIAGGIO & C. S.p.A., 56025 Pontedera (Pisa) (IT)
(72) Inventor: Raffaelli, Andrea, 51010 Massa e Cozzile (Pistoia) (IT)
(74) Representative: De Gregori, Antonella

(57) **Abstract**

The present invention refers to a frame for a motorcycle with adjustable pitch that comprises two beams (11,111) connected to a steering tube (20,120) at the front end (14,114) of the frame (10,110) and is characterised in that the steering tube (20,120,220) is located in a box-shaped body (18,118,218) fixedly connected to the beams (11,111,211) through locking means (17,117) that act in the longitudinal direction with respect to the main direction of extension of the frame (10,110).

## Description

The present invention refers to a frame for a motorcycle with adjustable pitch.

The dynamic behaviour of a motorcycle is influenced by numerous parameters that define its configuration like for example the steering angle, the front wheel trail, the position of the suspensions, the weight distribution, the unsprung masses and also the pitch of the motorcycle, i.e. the distance between two points of contact between the front and rear wheels with the ground.

By modifying the components that determine the values of such parameters it is possible to give the same motorcycle very different characteristics and greater or lesser handling and manoeuvrability, or rather a more or less fast and manageable response to the stresses provided by the road and driver.

The pitch of the motorcycle influences for example the barycentre and therefore the control of the motorcycle, the behaviour during braking thereof as well as the load transfer during acceleration and braking respectively to the rear and front wheel.

In known motorcycles, it is at most possible to carry out fine adjustment of the pitch, i.e. a small sized adjustment, as shall be seen hereafter.

The pitch can be varied, in motorcycles equipped with chain transmission, through the adjustments necessary to give the chain the correct tension, for example in the case of addition of links to it. In this case the pin of the rear wheel is moved inside the adjustment slots always present on the forks. A small variation in pitch is also thus obtained. A further possibility of tensioning the chain and consequent infinitesimal variation of the pitch, foresees an eccentric in the end part of the fork on which the wheel pin is inserted.

Moreover, the pitch also undergoes a variation, but again of small size, through the withdrawal or introduction of the fork tubes with respect to the steering plates that lift or lower the front part of the motorcycle by a few millimetres.

A further known possibility of variation of the pitch is carried out through adjustable bushings foreseen inside the steering tube. Such bushings are for example of the offset-perforation type, therefore allowing an adjustment in the radial direction that has the effect of moving the steering axis parallel to itself, the inclination thereof or a combination of the above.

Also in this case the pitch only undergoes a small variation.

In known motorcycles, the pitch is not therefore a parameter that can undergo large adjustments.

A large adjustment of the pitch of the motorcycle, would therefore be desirable for example in order to use the moulded side panels of the frame on the greatest possible number of variants that differ also in the diameter of the front wheel.

Similarly, it would be advantageous to be able to carry out large adjustments also on the steering angle, currently also only finely adjustable through the aforementioned adjustable bushings.

The purpose of the present invention is to avoid the aforementioned drawbacks and in particular to make a frame for motorcycles that allows a large adjustment of the pitch of the motorcycle.

A further purpose of the present invention is to make a frame for motorcycles in which it is possible to carry out a large adjustment of the steering angle.

Another purpose of the present invention is to provide a frame for motorcycles in which the large adjustments can be carried out simply and with easy access to the relative adjustment means.

These and other purposes according to the present invention are accomplished by making a frame for motorcycles as outlined in claim 1.

Further characteristics of the device are the object of the dependent claims.

The characteristics and advantages of a frame for motorcycles according to the present invention shall become clearer from the following description, given as a non-limiting example, referring to the attached schematic drawings, in which:
- figure 1 is a partial perspective view of the front part of the frame for motorcycles according to a first embodiment of the present invention;
- figure 2 is a partial perspective view of the frame of figure 1 according to a different angulation;
- figure 3 is a top side view of the box-shaped body containing the steering tube of the frame of figures 1 and 2;
- figure 4 is a partial perspective view of a variant of the first embodiment of the frame according to the invention;
- figure 5 is a section view according to the plane V-V of figure 4 of the box-shaped body mounted on the frame;
- figure 6 is a partial perspective view of the front part of the frame for motorcycles according to a further variant of the first embodiment of the present invention;

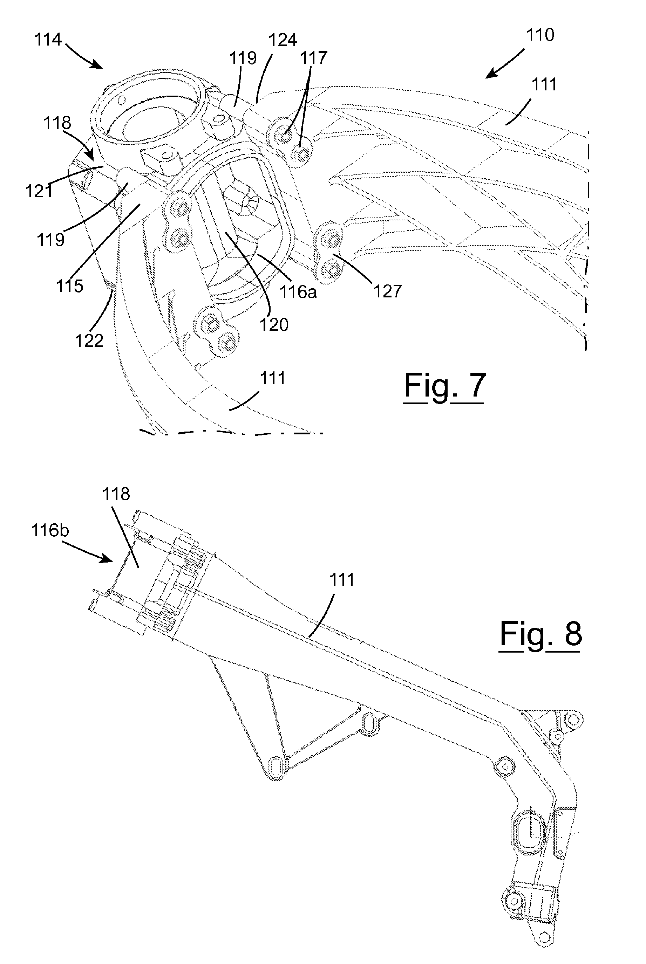

- figure 7 is a partial perspective view of the front part of the frame for motorcycles according to a second embodiment of the present invention;
- figure 8 is a top side view of the frame of figure 7;

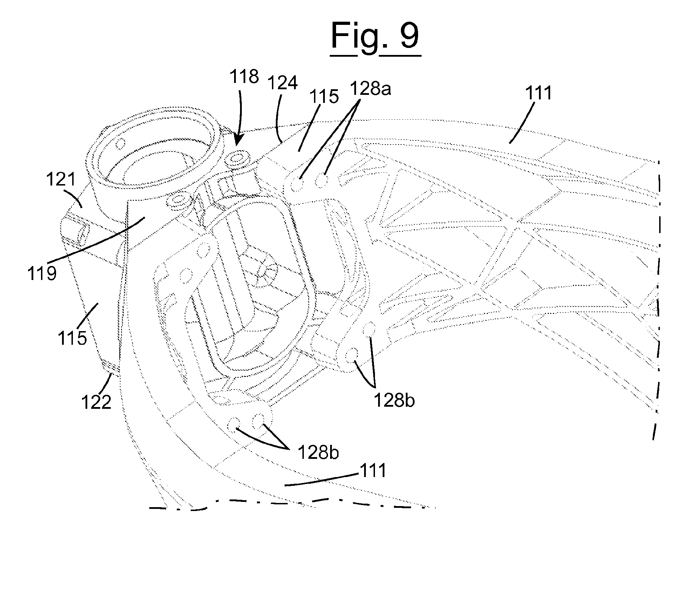

- figure 9 is a partial perspective view of a variant of the frame according to the second embodiment of the present invention.

With reference to the figures, a frame for motorcycles is shown, wholly indicated with 10,110.

The frame 10,110 according to the invention comprises two beams 11,111 alternatively made in a single piece (monolithic frame) or fixedly connected together at a first rear end 12 of the frame 10,110 for example through transversal rods (frame with two body side panels).

At the front end 14,114 of the frame 10,110 the two beams 11,111 are also connected to a steering tube 20,120 for joining with the tube of the fork (not depicted).

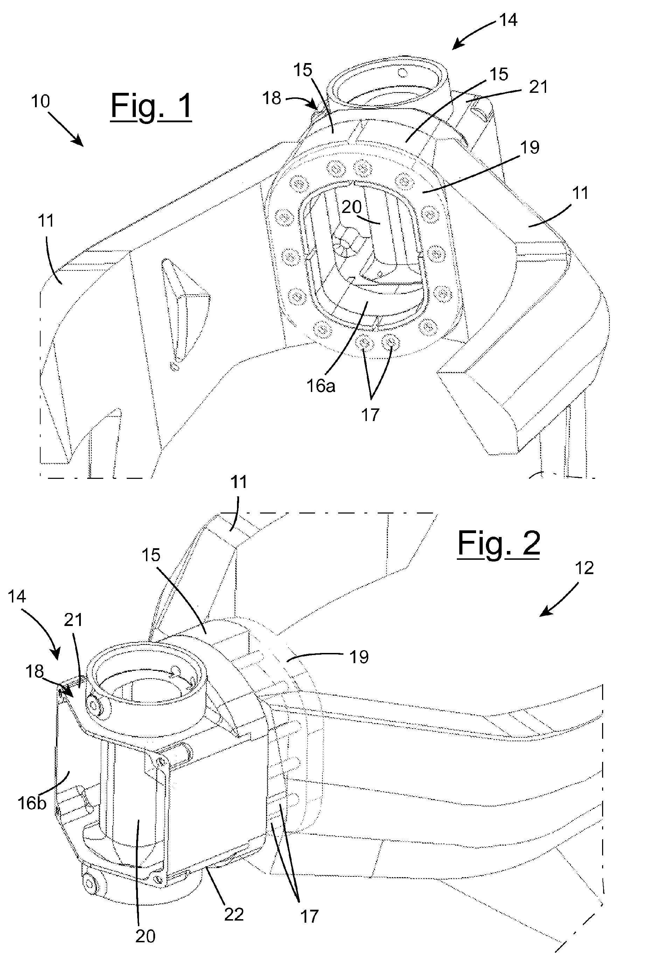

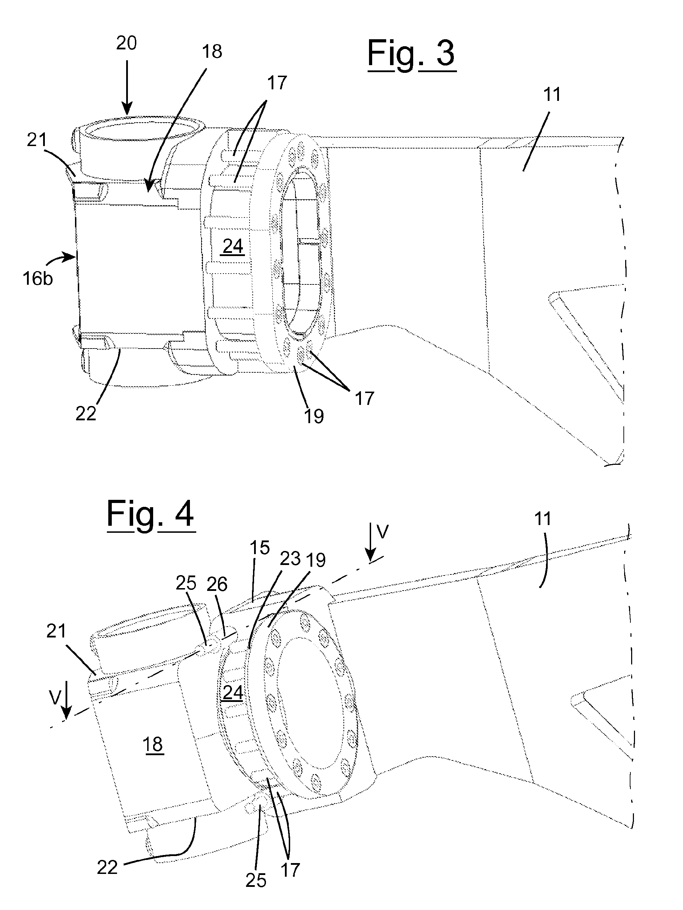

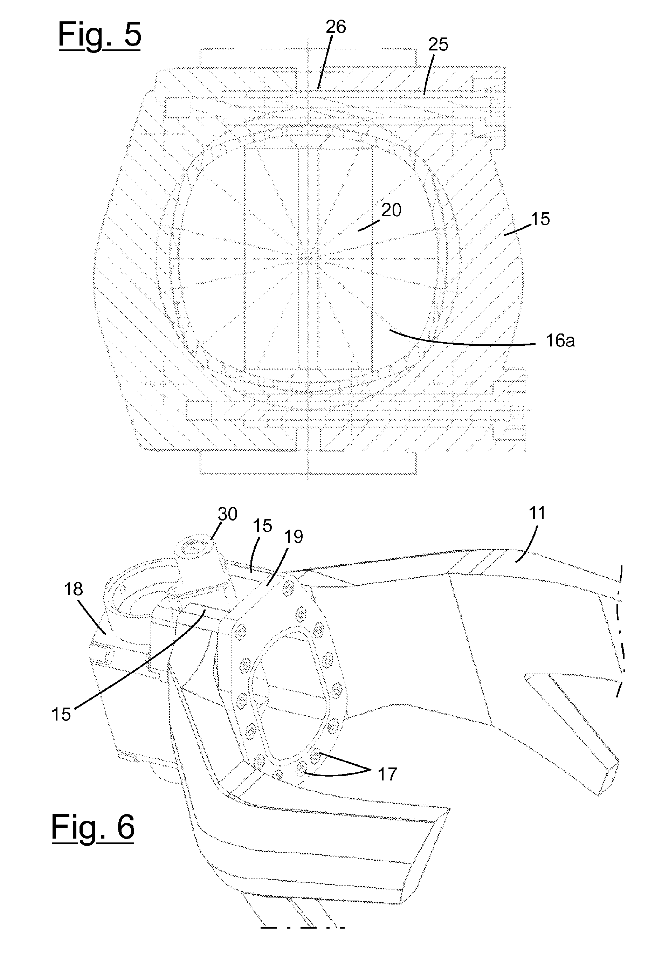

In a first embodiment, some variants of which are shown in figures 1-6, the endings 15 of the beams 11 at the front end 14 are substantially arc-shaped and in particular U-shaped (figures 1, 2 and 6) or C-shaped (figures 4 and 5) according to the embodiment, and are arranged close together so that the ends of the projections are substantially in contact, so as to define in the frame 10 a through annular opening having its axis substantially longitudinal to the main extension of the frame 10.

According to the configuration of the endings 15, the resulting annular opening can have a cylindrical, oval or substantially rectangular section, for example with bevelled corners.

Advantageously, the steering tube 20 is housed in a box-shaped body 18 and comes out into the top and bottom surfaces 21 and 22 thereof.

Such a box-shaped body 18 has a coupling portion 24 that is preferably narrow, having a section matching the section of the annular opening defined by the endings 15 of the beams 11. The box-shaped body 18 can therefore be partially housed in said opening and squashed in a pack between such endings 15.

The particular configuration of the endings 15 and of the box-shaped body 18 therefore allow a coupling between such a box-shaped body 18 and said endings 15 in the longitudinal direction with respect to the main direction of extension of the frame 10.

The locking means 17 therefore face inside the frame 10, thus being arranged in a protected position hidden from view.

Such an arrangement of the locking means 17 allows the user to intervene to carry out the adjustment of the pitch of the motorcycle moving the steering tube 20 away from the frame 10 through the interposition of suitable spacers 23. As an example, figure 4 shows the interposition of a thickness 23 between the box-shaped body 18 and the endings 15.

For this purpose, in a first variant of the frame 10 according to the invention, the box-shaped body 18, on the side for coupling with the endings 15, has a projecting flange 19 suitable for cooperating with the side of the endings 15 that is inside with respect to the frame 10.

Such a flange 19 is provided with through holes suitable for receiving a plurality of first screws 17. On the side of the endings 15 that is inside with respect to the frame 10 there are also corresponding holes.

The flange 19 can be made in a single piece with the box-shaped body 18. Alternatively, the flange 19 can be mounted with slightly forced coupling on the box-shaped body 18 or else it can have the inner walls equipped with a draft angle so that, through the effect of the tightening of the screws 17, an elastic compression takes place on the end of the box-shaped body 18 that is suitably notched. In this way, the connection is tighter than it would be from a simple spigot.

Preferably, as shown in figure 4, it is possible to foresee the use of second screws 25 that act in the transversal direction with respect to the main direction of extension of said frame 10, which are suitable for screwing tight the two beams 11 of the frame 10 on the coupling portion 24 of the box-shaped body 18.

Such screws 25 can be made from ergal or else steel and equipped with bushings 26 made from aluminium according to the diagram depicted in figure 4 that foresees using such bushings 26 as a spigot on the second ending 15 and in order to make the screw 25 mounted on a blind hole of such a second portion 15 airtight.

In a preferred configuration, the box-shaped body 18 has two opposite openings 16a,16b with its axis substantially longitudinal to the main extension of the frame 10 so as to integrate an air intake for the airbox.

In a preferred variant of the second embodiment, the box-shaped body 18 and the endings 15 are configured and mutually arranged so as to leave free a seat for housing an ignition switch 30 as shown in figure 6.

The variants shown in figures 1-6 lend themselves for the use of magnesium beams 11, steel screws 17 and aluminium box-shaped body 18 since the contact between steel and magnesium is airtight and thus safe from galvanic decay.

Alternatively, the frame 10 can be made from magnesium.

The screws 17 can be left in contact with the end portions 15 of the frame 10 in cases of coupling of steel material for the screws 17 and aluminium material for the frame 10, or aluminium material for the screws 17 and magnesium material for the frame 10, or else through the interposition of an aluminium flange 19 in the case of steel screws 17 and magnesium frame 10.

As an alternative to attachment by means of screws 17, a ring nut (not illustrated) can be used coupled with the coupling portion 24 of the box-shaped body 18. In this case, the annular opening formed by the endings 15, just like the coupling portion 24 of the box-shaped body 18, have a circular section.

In the case of separate beams 11, the centring and the radial positioning with respect to the axis of the opposite openings 16a,16b of the box-shaped body 18 is ensured through pins. Vice-versa, in the case of beams in a single piece (monolithic frame), the centring takes place directly in the narrow portion 24 of the box-shaped body 18 and the radial positioning must be achieved with a pin or an abutment plane.

In the preferred but not exclusive case of an aluminium box-shaped body 18 and magnesium beams 11, the ring nut may not be made from steel. The attachment therefore consists of a separate coupling portion 24, made from steel and having an external threading. The coupling portion 24 is partially screwed into the box-shaped body 18 and on the remaining part an aluminium ring nut is screwed that can be rested on magnesium. Box-shaped body 18 and ring nut are therefore screwed against one another on the steel coupling portion 24 safe against unscrewing.

In a second embodiment, the beams 111 do not clamp a portion of the box-shaped body 118 into a pack at their endings 115, but they are locked at their end surface 124 to at least one joining element 119 foreseen on such a box-shaped body 118.

In this way, the box-shaped body 118, which contains the steering tube 120, can also be fixedly connected to a monolithic frame.

Similarly to what has been described for the first embodiment, the box-shaped body 118 contains the steering tube 120 that comes out into the top and bottom surfaces 121, 122 thereof.

Also in the second embodiment, the locking means 17 act in the longitudinal direction and are accessible from the inside of the frame 110, thus being arranged in a protected position hidden from view. It is therefore possible for the user to intervene on the attachment means 117 to carry out an adjustment of the pitch of the motorcycle moving the box-shaped body 118 and therefore the steering tube 120 away from the frame 110 through the interposition of suitable spacers 23.

In a preferred embodiment, the endings 115 are arc-shaped. Moreover, the box-shaped body 118 is locked to the endings 115 through a small number of screws 117, arranged longitudinally to the main direction of extension of the frame 110.

For this purpose, the box-shaped body 118 is fixedly connected to the joining element 119 that cooperates with the side of the endings 115 that is outside with respect to the frame 110 and provided with a plurality of holes suitable for receiving the screws 117.

Preferably, washers 127 are foreseen at the holes.

The endings 115 are also provided with corresponding through holes 125.

In a preferred variant, each ending 115 comprises a pair of top holes 128a and a pair of bottom holes 128b suitably arranged and the joining element 119 comprises eight corresponding holes.

Preferably, the box-shaped body 118 has two opposite openings 116a,116b with their axis substantially longitudinal to the main extension of the frame so as to make an air intake.

From the description that has been made the characteristics of the device object of the present invention are clear, just as the relative advantages are also clear.

The longitudinal arrangement of the attachment means, on the one hand, makes them easily accessible, and on the other hand, allows an adjustment of the pitch of the motorcycle and of the steering angle by the user who can intervene through the interposition of a spacer, rather than replacing the box-shaped body with another, for example associated with a longer steering tube.

In this way it is possible to compensate the passage of diameter between different wheels, in order to use the moulded side panels of the frame on the greatest possible number of variants. Without such a compensation, by changing the diameter of the front wheel, when the suspension goes as far as it can, the wheel would come into contact with the radiator.

Finally, it is clear that the device thus conceived can undergo numerous modifications and variants, all of which are covered by the invention; moreover, all of the details can be replaced by technically equivalent elements. In practice, the materials used, as well as the sizes, can be whatever according to the technical requirements.

## Claims

1. Frame for a motorcycle (10,110) comprising two beams (11,111) connected to a steering tube (20,120) at the front end (14,114) of said frame (10,110) **characterised in that** said steering tube (20,120,220) is located in a box-shaped body (18,118,218) fixedly connected to said beams (11,111,211) through locking means (17,117) that act in the longitudinal direction with respect to the main direction of extension of said frame (10,110).

2. Frame for a motorcycle (10,110) according to claim 1 **characterised in that** said locking means (17,117) are accessible inside said frame (10,110).

3. Frame for a motorcycle (10) according to claim 1 or 2 **characterised in that** at least one spacer (23) is arranged between said box-shaped body (18,118) and said beams (11, 111) .

4. Frame for a motorcycle (10) according to any one of claims 1 to 3 **characterised in that**, to lock said box-shaped body (18,118) to said beams (11,111), said locking means (17,117) act upon at least one joining element (19,119) present on said box-shaped body (18,118) and on end portions (15,115) of said beams (11, 111) .

5. Frame for a motorcycle (10) according to any one of claims 1 to 4 **characterised in that** said locking means are screws (17, 117).

6. Frame for a motorcycle (10) according to any one of claims 1 to 4 **characterised in that** said locking means are a ring nut.

7. Frame for a motorcycle (10) according to any one of claims 4 to 6 **characterised in that** said joining element (119) is locked to the end surface (124) of said beams (111).

8. Frame for a motorcycle (10) according to any one of claims 4 to 6 **characterised in that** said endings (15) are substantially arc-shaped and kept substantially in contact with each other, so as to define in the frame (10) an annular opening having its axis substantially longitudinal to the main extension of the frame (10) and suitable for surrounding a coupling portion (24) of said box-shaped body (18).

9. Frame for a motorcycle (10) according to claim 8 **characterised in that** said joining element (19) is a projecting flange foreseen in the box-shaped body (18), arranged adjacent to said coupling portion (24).

10. Frame for a motorcycle (10) according to claim 9 **characterised in that** said flange (19) is made in a single piece with said box-shaped body (18).

11. Frame for a motorcycle (10) according to claim 9 **characterised in that** said flange (19) is mounted with shape and/or force coupling on said box-shaped body (18) .

12. Frame for a motorcycle (10) according to any one of claims 8 to 11 **characterised in that** said endings (15) are locked onto said coupling portion (24) of said box-shaped body (18) through second screws (25) that act in the transversal direction with respect to the main direction of extension of said frame (10,110).

13. Frame for a motorcycle (10) according to any one of claims 8 to 12 **characterised in that** said coupling portion (24) is separate from said box-shaped body (18) and has an external threading for screwing onto said box-shaped body (18).

14. Frame for a motorcycle (10) according to any one of claims 8 to 13 **characterised in that** said box-shaped body (18) and said endings (15) are shaped and mutually arranged so as to form a seat for housing an ignition switch (30).

15. Frame for a motorcycle (10,110) according to any one of the previous claims **characterised in that** said box-shaped body (18,118) is provided with opposite openings (16a,16b,116a,116b) with its axis substantially longitudinal to the main extension of said frame (10,110).

16. Frame for a motorcycle (10,110) according to any one of the previous claims **characterised in that** said beams (11,111) are made in a single piece.

17. Frame for a motorcycle (10,110) according to any one of claims 1 to 15 **characterised in that** said beams (11,111) are fixedly connected together at a rear end (12) of said frame (10,110).
